# EUROPEAN PATENT APPLICATION

(11) **EP 4 529 766 A1**
(43) Date of publication of application: **02.04.2025**
(21) Application number: 24201525.3
(22) Date of filing: 20.09.2024
(51) Int. Cl.: A01N 59/16, A01P 1/00, A01P 3/00, A23B 7/157, C12H 1/14

(54) **PROCESS FOR THE PRODUCTION OF WINE**

(30) Priority: 26.09.2023 IT 202300019782
(71) Applicant: Ilari, Giuseppe, 63833 Montegiorgio FM (IT)
(72) Inventor: Ilari, Giuseppe, 63833 Montegiorgio FM (IT)
(74) Representative: Benetazzo, Flavia

(57) **Abstract**

A process for producing wine comprises the steps of: preparing colloidal silver, distributing the colloidal silver on a vine, and winemaking; the winemaking step comprises the steps of: harvesting grapes, destemming, crushing, fermentation, filtration, and bottling, and adding colloidal silver at least once to the grapes harvested from vines treated with colloidal silver, and/or to must obtained from grapes harvested from vines treated with colloidal silver, and/or to wine obtained from grapes harvested from vines treated with colloidal silver.

## Description

The present patent application for an industrial invention relates to a process for the production of wine.

It is known that vines used for wine production are treated with chemical compounds, to prevent diseases of the vine, such as a disease called downy mildew. The term "downy mildew" refers to a vine disease caused by parasitic organisms. The most commonly used chemical compounds are copper-based, such as copper sulfate or copper sulfate neutralized with calcium hydroxide or ammonium hydroxide. Typically, a vineyard undergoes approximately 8-10 cycles of treatment per year, from bud break to grape harvest, with the copper-based compound.

Although the chemical compound prevents the development of vine diseases, it presents some drawbacks.

A first drawback is that this chemical compound, in large quantities, can be toxic to the plant and the surrounding soil, causing an alteration of the ecosystem and pollution of the soil and water.

A second drawback is that these chemical compounds are toxic to humans, both when inhaled and ingested. It is known that grapes from a vine treated with copper-based chemical compounds are contaminated with residues of these copper-based chemical compounds. Moreover, copper-based chemical compounds are usually sprayed onto the vine. Therefore, both inhaling the chemical compound during the application of the chemical compound to the vine, and ingesting grapes from a vine treated with the chemical compound can be harmful to the organism. This drawback is particularly relevant in wine production. In fact, wine, produced from grapes, contaminated with chemical compounds applied to the vine, in turn contains traces of this chemical compound and is therefore harmful to the organism.

It is common knowledge that wine is produced from grapes through a winemaking process comprising the following steps:
- harvesting, in which grapes are harvested;
- destemming, in which the berries of the harvested grapes are separated from the stems of the grapes;
- crushing, in which the berries of the grapes are pressed in order to obtain must;
- fermentation, in which sugars present in the must are transformed into alcohol thanks to yeasts, in order to obtain wine;
- filtration, in which the wine is filtered;
- bottling, in which the filtered wine is bottled.

At every stage of winemaking, external agents such as bacteria and molds can contaminate the grapes, must, or wine, compromising the success of the entire winemaking process. In other words, contaminated wine cannot be drunk and there will be an economic loss due to the inability to sell the contaminated wine.

In order to overcome this drawback, the winemaking process comprises the addition of chemical compounds, in particular sulfites, to the grapes and/or must and/or wine. Usually, sulfites are added to the must after crushing and/or to the wine after fermentation and before bottling.

Sulfites, such as potassium metabisulfite, are preservatives capable of blocking the action of external agents.

However, sulfites have adverse effects on a consumer who consumes wine containing said sulfites. For example, sulfites cause gastric mucosal irritation, headaches, abdominal pain, and vomiting. The greater the amount of sulfites present in the wine, the greater the adverse effects on the body. Even if sulfites are added to the grapes or must between the steps of grape harvesting and fermentation, said sulfite will remain present in the obtained wine.

Furthermore, potassium metabisulfite has a pungent taste and, especially in large quantities, alters the taste of wine.

It should be noted that copper-based chemical compounds used to treat vines are different from the chemical compounds used in wine production, after grape harvesting, namely sulfites. Therefore, the wine is contaminated by both chemical compounds, usually copper-based, used on the vine, and chemical compounds, in particular sulfites, used during the winemaking process after grape harvesting. These chemical compounds are harmful to the body and cause the wine to be not totally natural and organic.

Pedro M. Izquierdo-Caas et al. ("Colloidal silver complex as an alternative to sulphur dioxide in winemaking", Food Control, Butterworth, London, GB, vol. 23, no. 1, 16 June 2011 (2011-06-16), pages 73-81, XP028277586, ISSN: 0956-7135, DOI: 0.1016/J.FOODCONT.2011.06.014), Garde-Cerdan T. et al. ("Application of colloidal silver versus sulfur dioxide during vinification and storage of Tempranillo red wines", Australian Journal Of Grape And Wine Research, Australian Society Of Viticulture And Oenology, AU, vol. 20, no. 1, 29 October 2013 (2013-10-29), pages 51-61, XP072017072, ISSN: 1322-7130, DOI: 10.1111/AJGW.12050) and Marchante Lourdes et al. ("Natural extracts from grape seed and stem byproducts in combination with colloidal silver as alternative preservatives to SO2 for white wines: Effects on chemical composition and sensorial properties", Food Research International, Elsevier, Amsterdam, NL, vol. 125, 27 July 2019 (2019-07-27), XP085833662, ISSN: 0963-9969, DOI: 10.1016/J. FOODRES.2019.108594) describe the use of colloidal silver in the winemaking process. However, this wine can be still contaminated by chemical compounds used on the vine before harvest.

The objective of the present invention is to overcome the drawbacks of the prior art, providing a process that allows to produce wine that can be stored over time and is free of chemical compounds, so as to have no side effects on a consumer who drinks the wine.

A further objective is to provide a process that allows for obtaining a wine with an unaltered taste.

Another objective is to provide a process that is economical and easy to implement.

These objectives are achieved in accordance with the invention having the features listed in the appended independent claim 1.

Advantageous embodiments appear from the dependent claims.

The process according to the invention is defined by claim 1.

The advantages of the process according to the invention are evident, in which thanks to the step of distributing colloidal silver on a vine and the step of adding colloidal silver at least once to the grapes, harvested from vines treated with colloidal silver, and/or to the must, obtained from grapes harvested from vines treated with colloidal silver, and/or to the wine, obtained from grapes harvested from vines treated with colloidal silver, it is possible to obtain a wine that can be stored over time and that is totally free of chemical compounds.

The process according to the invention for producing wine is described below.

The process according to the invention comprises a step of preparing colloidal silver. Said step of preparing colloidal silver optionally comprises a step of preparing a mixture of silver particles suspended in a liquid, such as, for example, purified water. Advantageously, the water of the colloidal silver is demineralized, distilled or bi-distilled.

In other words, the colloidal silver used comprises a liquid, such as, for example, purified water, optionally demineralized, distilled or bi-distilled, and silver ions, optionally with a size smaller than 0.01 micrometers. The concentration of silver ions in the colloidal silver varies from 10 to 40 ppm.

Alternatively, it is possible to use colloidal silver powder.

The process according to the invention comprises a step of treating a vine to prevent vine diseases. Said step of treating a vine to prevent vine diseases comprises a step of distributing colloidal silver on a vine, as a treatment to prevent vine diseases, in particular a disease known as downy mildew. It has indeed been demonstrated that the use of colloidal silver on vines acts as an antifungal treatment and protects the vine from diseases, such as downy mildew.

Optionally, the step of distributing colloidal silver on a vine comprises a step of performing a cycle of treatments, from bud break of the vine to harvesting of the grapes, wherein at least the last four treatments are performed using colloidal silver on the vine. The previous treatments, from the first to the fifth to last, are carried out using colloidal silver or using copper-based chemical compounds or a combination of colloidal silver and copper-based chemical compounds.

For example, the vine is treated 8-10 times from bud break to harvesting of the grapes. At least the last four times, the treatment is carried out by applying colloidal silver to the vines. In this way, it has been demonstrated that, even if the treatments from the first to the fifth to last are performed with copper-based chemical compounds, such chemical compounds do not contaminate the grapes. Therefore, the grapes obtained by treating the vine with colloidal silver, at least the last four times before harvest, do not contain traces of chemical compounds.

Optionally, the step of distributing colloidal silver on a vine comprises a step of distributing an amount of colloidal silver of between 150 kg and 250 kg per hectare of land cultivated with vines, for each treatment. It should be noted that each hectare of land comprises approximately 10,000 vines. Therefore, the amount of colloidal silver distributed on each vine, for each treatment, is between 0.015 and 0.025 kg. It has been demonstrated that this quantity protects the vines from diseases, and in particular from downy mildew.

Optionally, the step of distributing colloidal silver on a vine comprises a step of spraying the colloidal silver onto the vine using a sprayer.

In this way, it is possible to obtain grapes free from residues of chemical compounds. Therefore, said grapes are not harmful to the organism. Furthermore, colloidal silver is not toxic. Therefore, during the application of colloidal silver, an operator is not at risk of inhaling chemical compounds harmful to health.

Said process comprises a winemaking step to obtain wine, starting from grapes harvested from a vine treated with colloidal silver.

The winemaking step comprises a harvesting step, namely the harvesting of grapes from the vine treated with colloidal silver. In this phase, the grapes are harvested manually or by machinery. Subsequently, the harvested grapes are divided into ripe grapes, which continue the winemaking process, and unripe grapes, which are discarded.

The winemaking process comprises a destemming step, wherein berries of the harvested ripe grapes are separated from the stems of grapes. The destemming step can be carried out manually or using destemming machines.

The winemaking process also comprises a crushing step, wherein the berries of the grapes are pressed to obtain must. The crushing step is carried out using specialized machinery.

The must, obtained from the crushing step, is grape juice that also comprises solid parts such as seeds and skins. Optionally, if a white wine is desired, the winemaking process comprises a step of filtering the must to separate the grape juice from the solid parts immediately after crushing. If a red wine is desired, these solid parts are left together with the grape juice.

Optionally, the crushing step comprises a pressing step, in order to extract the remaining must from the grapes.

The winemaking process comprises a fermentation step, in which the must is placed in a closed container and allow to rest so that the must ferments and becomes wine.

During the fermentation step, sugars present in the must are transformed into alcohol by yeasts, thus obtaining wine. The must begins to ferment naturally within 6-12 hours of placing the must in the container. Optionally, the fermentation step may comprise a step of adding yeasts and fermentation activators to the must to facilitate fermentation. The fermentation step comprises a step of allowing the must to ferment for a period of between 7 and 15 days.

Following the fermentation step, the winemaking process comprises a filtration step, wherein the wine is filtered. More specifically, the wine:
- is racked to remove any solid particles, if they have not already been removed before the fermentation step;
- is passed through filters to make the wine less turbid;
- is clarified to remove unwanted particles from the wine.

The winemaking process comprises a bottling step, in which the filtered wine is bottled.

Optionally, before the bottling step, the winemaking process may comprise an ageing or maturation step, wherein the wine is placed in barrels.

The winemaking process comprises a step of adding colloidal silver at least once to the grapes, harvested from vines treated with colloidal silver, and/or to the must, obtained from grapes harvested from vines treated with colloidal silver, and/or to the wine, obtained from grapes harvested from vines treated with colloidal silver.

Advantageously, the step of adding colloidal silver at least once to the grapes and/or must and/or wine comprises a step of adding colloidal silver:
- to the grapes during or at the end of the grape harvesting step, and/or
- to the grapes before, during, or at the end of the destemming step, and/or
- to the grapes before the crushing step, and/or
- to the must during or at the end of the crushing step, and/or
- to the must before or during the fermentation step, and/or
- to the wine at the end of the fermentation step, and/or
- to the wine before, during, or at the end of the filtration step, and/or
- to the wine before, during, or at the end of the ageing or maturation step, and/or
- to the wine before the bottling step.

Preferably, the step of adding colloidal silver at least once to the grapes and/or must and/or wine comprises a step of adding colloidal silver to the must before the fermentation step. Alternatively or in addition, the step of adding colloidal silver at least once to the grapes and/or must and/or wine comprises a step of adding the colloidal silver to the wine at the end of the fermentation step.

The use of colloidal silver in the winemaking process, thanks to the antibacterial and antifungal properties of colloidal silver, prevents the formation of external agents such as bacteria and mold in harvested grapes, must, and/or wine, while at the same time being harmless to the health of a consumer who consumes the wine obtained using the process according to the invention. In fact, colloidal silver, unlike the sulfites used in known processes, is not harmful to the health of a consumer who consumes it.

Moreover, colloidal silver also has antioxidant and stabilizing properties. Therefore, the use of colloidal silver in the wine production process allows the wine to be preserved over time without deteriorating.

Colloidal silver has no taste or odor. In this way, colloidal silver does not alter the taste of the wine obtained through the process according to the invention.

Colloidal silver is easily available and has a low cost. Therefore, the process according to the invention is economical and simple to implement.

The use of colloidal silver both on a vine as a treatment to prevent vine diseases, and in the winemaking process, as an addition to grapes, harvested from vines treated with colloidal silver, and/or to must, obtained from grapes harvested from vines treated with colloidal silver, and/or to wine, obtained from grapes harvested from vines treated with colloidal silver, as an antibacterial and antifungal agent, has a synergistic effect. In fact, grapes, harvested from a vine treated with colloidal silver, contain traces of colloidal silver, which has an antibacterial action and delays the deterioration of said grapes. Therefore, it is possible to delay the crushing step, waiting even 3-4 days after destemming the grapes, without the destemmed grapes deteriorating.

Thanks to the use of grapes harvested from a vine treated with colloidal silver, during the winemaking process it is possible to add colloidal silver to the grapes, must, and/or wine only once and using a reduced quantity of colloidal silver, still obtaining a wine that can be stored over time. In particular, the step of adding colloidal silver at least once to the grapes and/or must and/or wine comprises a step of adding at least once an amount of colloidal silver between 2 and 10 ml per 100 liters of wine or must or per 100 kg of grapes. It has been demonstrated that this quantity is sufficient to obtain a wine that can be stored over time.

Moreover, the wine, obtained using grapes harvested from a vine treated with colloidal silver and adding colloidal silver during the winemaking process, is totally organic and not harmful to human health, as it does not contain chemical compounds.

It should be noted that the dosages reported above are indicative and that if a greater quantity of colloidal silver were distributed on a vine or added to wine, must, and/or grapes, the quality of the wine obtained using the process according to the invention would not deteriorate, nor would there be any side effects on the health of the consumer who consumes said wine.

Modifications or variations of detail within the scope of a person skilled in the art may be made to the present embodiment of the invention, which, however, fall within the scope of the invention as expressed in the appended claims.

## Claims

1. Process for producing wine comprising the following steps:
- treating a vine to prevent vine diseases;
- winemaking;
said winemaking step comprising the steps of:
- harvesting of grapes;
- destemming, wherein berries from the harvested grapes are separated from stems of grapes;
- crushing, wherein the berries of the grapes are pressed to obtain must;
- fermentation, wherein the must is placed in a container and allowed to rest so that the must ferments and becomes wine;
- filtration, wherein the wine is filtered;
- bottling, wherein the filtered wine is bottled;
wherein
said process comprises a step of preparing colloidal silver;
said step of treating a vine to prevent vine diseases comprises a step of distributing colloidal silver on a vine;
said winemaking step comprises a step of adding colloidal silver at least once to the grapes, harvested from vines treated with colloidal silver, and/or to the must, obtained from grapes harvested from vines treated with colloidal silver, and/or to the wine, obtained from grapes harvested from vines treated with colloidal silver.

2. Process according to claim 1, wherein the step of distributing the colloidal silver on a vine comprises a step of performing a cycle of treatments, from bud break of the vine to the harvesting of the grapes, wherein at least the last four treatments are performed using colloidal silver on the vine.

3. Process according to claim 1 or 2, wherein the step of distributing the colloidal silver on a vine comprises a step of distributing an amount of colloidal silver of between 150 kg and 250 kg per hectare of land cultivated with vines, for each treatment.

4. Process according to any one of the preceding claims, wherein the step of distributing the colloidal silver on a vine comprises a step of spraying the colloidal silver onto the vine using a sprayer.

5. Process according to any one of the preceding claims, wherein the step of adding the colloidal silver to the grapes and/or must and/or wine comprises a step of adding at least once an amount of colloidal silver of between 2 and 10 ml per 100 liters of wine or must or per 100 kg of grapes.

6. Process according to any one of the preceding claims, wherein the step of adding the colloidal silver at least once to the grapes and/or must and/or wine comprises a step of adding the colloidal silver to the must before the fermentation step.

7. Process according to any one of the preceding claims, wherein the step of adding the colloidal silver at least once to the grapes and/or must and/or wine comprises a step of adding the colloidal silver to the wine at the end of the fermentation step.

8. Process according to any one of the preceding claims, wherein the step of adding the colloidal silver at least once to the grapes and/or must and/or wine comprises a step of adding the colloidal silver:
- to the grapes during or at the end of the grape harvesting step, and/or
- to the grapes before, during, or at the end of the destemming step, and/or
- to the grapes before the crushing step, and/or
- to the must during or at the end of the crushing step, and/or
- to the must during the fermentation step, and/or
- to the wine before, during, or at the end of the filtration step, and/or
- to the wine before the bottling step.

9. Process according to any one of the preceding claims, wherein said winemaking process comprises, before the bottling step, an ageing or maturation step, wherein the wine is placed in barrels; said step of adding the colloidal silver at least once to the grapes and/or must and/or wine comprising a step of adding the colloidal silver to the wine before, during, or at the end of the ageing or maturation step.

10. Use of colloidal silver on a vine as a treatment to prevent vine diseases.

11. Use of colloidal silver on a vine as an antifungal treatment to prevent downy mildew.

12. Use of colloidal silver both on a vine as a treatment to prevent vine diseases, and in a winemaking process as an addition to grapes, harvested from vines treated with colloidal silver, and/or to must, obtained from grapes harvested from vines treated with colloidal silver, and/or to wine, obtained from grapes harvested from vines treated with colloidal silver, as an antibacterial and antifungal agent.
